# EUROPÄISCHE PATENTSCHRIFT

(11) **EP 3 879 223 B1**
(45) Veröffentlichungstag und Bekanntmachung des Hinweises auf die Patenterteilung: **20.04.2022**
(21) Anmeldenummer: 20162994.6
(22) Anmeldetag: 13.03.2020
(51) Int. Cl.: G01B 11/27, G01B 5/00

(54) **VERFAHREN ZUR BESTIMMUNG DER SYMMETRIELÄNGSACHSE EINES FAHRZEUGS**
METHOD FOR DETERMINING THE LONGITUDINAL AXIS OF SYMMETRY OF A VEHICLE
PROCÉDÉ DE DÉTERMINATION DE L'AXE LONGITUDINAL DE SYMÉTRIE D'UN VÉHICULE

(43) Veröffentlichungstag der Anmeldung: 15.09.2021
(73) Patentinhaber: WMS Wagner GmbH, 94522 Wallersdorf (DE)
(72) Erfinder: WAGNER, Franz, 94522 Wallersdorf (DE)
(74) Vertreter: Kuhnen & Wacker Patent- und Rechtsanwaltsbüro PartG mbB

(56) Entgegenhaltungen:
- CN-U- 206 073 934
- CN-U- 207 095 560
- DE-A1-102017 214 014
- US-A- 4 630 379
- US-B1- 6 347 457

## Beschreibung

Die Erfindung betrifft ein Verfahren zur Bestimmung der Symmetrielängsachse zwischen einem vorderen Mittelpunkt und einem hinteren Mittelpunkt eines Fahrzeugs mit Hilfe eines Linienlasers nach dem Oberbegriff des Patentanspruchs 1.

Bei Kraftfahrzeugen ist es zur Ausrichtung und Positionierung von Kalibriereinheiten für Fahrzeugsensoren von Fahrerassistenzsystemen erforderlich, die Fahrzeugmittellinie (Symmetrielängsachse zwischen einem vorderen Mittelpunkt und einem hinteren Mittelpunkt des Fahrzeugs) herzustellen. Diese Fahrzeugmittellinie stimmt im allgemeinen mit der geometrischen Fahrachse des Fahrzeugs nicht überein, die bestimmt ist von der Geometrie des Fahrwerks an Vorder- und Hinterachse (z. B. Sturz, Spreizung, Vorlauf bzw. Nachlauf).

Der Erfindung liegt die Aufgabe zugrunde, ein System zur Bestimmung der Fahrzeugmittellinie anzugeben, das im Einmannbetrieb mittels eines Linienlasers einfach und innerhalb kürzester Zeit dargestellt werden kann, um Kalibriereinrichtungen für Fahrzeugsensoren von Fahrerassistenzsystemen positionieren und ausrichten zu können.

Hierzu wird gemäß der Erfindung ein Linienlaser mit einer zugeordneten Empfängereinheit verwendet, die als Signalwandler dient und auf einer Seite eine senkrechte Referenzlinie und auf der gegenüberliegenden Senderseite eine opto-akustische Sendeeinheit hat.

Mit Hilfe dieser beiden voneinander unabhängigen Geräte (Linienlaser und Signalwandler) kann gemäß der Erfindung bei dem Verfahren die nachstehende Folge von Arbeitsschritten durchgeführt werden:
a. Positionieren des Linienlasers unter dem vorderen oder hinteren Ende des Fahrzeugs, bis der senkrechte Laserstrahl durch den vorderen bzw. hinteren Mittelpunkt des Fahrzeugs läuft,
b. Positionieren der Empfängereiheit unter dem genannten Ende des Fahrzeugs, bis der senkrechte Laserstrahl auf der senkrechten Referenzlinie der Empfängereinheit liegt,
c. Belassen der Empfängereinheit in dieser mittigen Position b,
d. Positionswechsel des Linienlasers unter das andere Ende des Fahrzeugs, bis der senkrechte Laserstrahl durch den gegenüberliegenden Mittelpunkt am anderen Ende des Fahrzeugs läuft, wozu
e. der Linienlaser in quer zur Fahrzeugmittellinie verlaufender x-Richtung und/oder in dazu rechtwinkliger y-Richtung verschoben wird und
f. so lange um seine zentrische Hochachse verdreht wird, bis der Laserstrahl auf die von der Referenzlinie gemäß Schritt b abgewandte Senderseite der Empfängereinheit trifft, wodurch
g. diese in der nun ausgerichteten Position ein akustisches Signal aussendet.

Dabei ist es vorteilhaft, wenn der Linienlaser in einer Halterung eines flachen Schwenkarms positioniert wird, der auf einer Trägerplatte um eine senkrechte Schwenkachse gelagert ist, die durch das Zentrum des Linienlasers verläuft.

In Weiterbildung der Erfindung ist das von der Schwenkachse abgewandte Ende des Schwenkarms in einer kreisbogenförmigen Führung feststellbar, der eine Gradskala zugeordnet ist.

Aus CN 206 073 934 U ist eine kastenförmige Vorrichtung mit einer den Deckel bildenden Trägerplatte bekannt, auf der eine kreisförmige Platte drehverstellbar gelagert ist, die eine höhenverstellbare Halterung für einen Linienlaser hat und um eine senkrechte Schwenkachse gedreht werden kann.

US 6 347 457 B1 zeigt eine drehbare Laservorrichtung mit zwei Linienlasern, die um 180° zueinander ausgerichtet sind und auf Targets zielen, die am vorderen und am hinteren Teil eines Trägers positioniert sind.

US 4 630 379 betrifft eine Vorrichtung zur Bestimmung der Symmetrielängsachse eines Fahrzeugs mittels eines Lasers, der auf Referenzmarken zielt, so dass das vom Laser emittierte Licht mit der Symmetrielängsachse zusammenfällt. Der Laser ist sowohl in Rotation als auch in Translation beweglich.

DE 10 2017 214 014 A1 beschreibt ein Verfahren zum Justieren eines Targets gegenüber der Längsachse eines Fahrzeugs, indem sich eine Laserlinie und mindestens eine am Fahrzeug vorhandene Referenzlinie überdecken, wobei die Laserlinie von einem Lasergerät emittiert wird, das temporär an dem Träger des Targets befestigt ist.

Es ist vorteilhaft, wenn auf dem flachen Schwenkarm ein nach oben ausklappbarer Spiegel angebracht ist, so dass eine optische Kontrolle und Einstellung der Position des Laserstrahls am gegenüberliegenden Ende des Fahrzeugs möglich ist, ohne dass sich die Bedienungsperson hierzu bücken muss.

Die Trägerplatte kann als Schlitten ausgebildet sein, der quer zur Symmetrieachse des Fahrzeugs auf einer Hilfsschiene verfahrbar ist. Auf diese Weise ist es möglich, die Fahrzeugmittellinie durch eine Verschiebung des Schlittens auf der Hilfsschiene exakt parallel zur Seite zu verschieben, beispielsweise zur Ausrichtung von Lichteinstellsystemen in Bezug zur Fahrzeugmitte oder von Einstellungen von Sensoren, die seitlich am Fahrzeug angebracht sind.

Die Erfindung ist nachstehend an einem Ausführungsbeispiel erläutert, das in der Zeichnung dargestellt ist. In dieser zeigen:
Figur 1 eine Teilseitenansicht eines Fahrzeugs (PKW) mit am Heck positioniertem Linienlaser und einer an der Frontseite des Fahrzeugs positionierten Empfängereinheit,
Figur 2 eine Draufsicht auf die Anordnung der Figur 1,
Figur 3 die schematische Darstellung einer Kalibriereinheit,
Figur 4 die Draufsicht auf das Fahrzeug der Figur 2, wobei die geometrische Fahrachse und die dazu winklig angeordnete Symmetrielängsachse (Mittelachse) dargestellt ist,
Figur 5 die Ansicht eines handelsüblichen Linienlasers für den Einsatz in dem erfindungsgemäß vorgesehenen Verfahren,
Figur 6 die Darstellung der vertikalen Senderseite einer als Signalwandler ausgebildeten, handelsüblichen Justiereinrichtung,
Figur 7 die bezüglich Figur 6 abgewandte Rückseite der Justiereinrichtung,
Figur 8 die Ansicht der Trägerplatte für die Aufnahme des Linienlasers und
Figur 9 die Draufsicht auf den Schwenkarm der Trägerplatte mit Halterung für den Linienlaser.

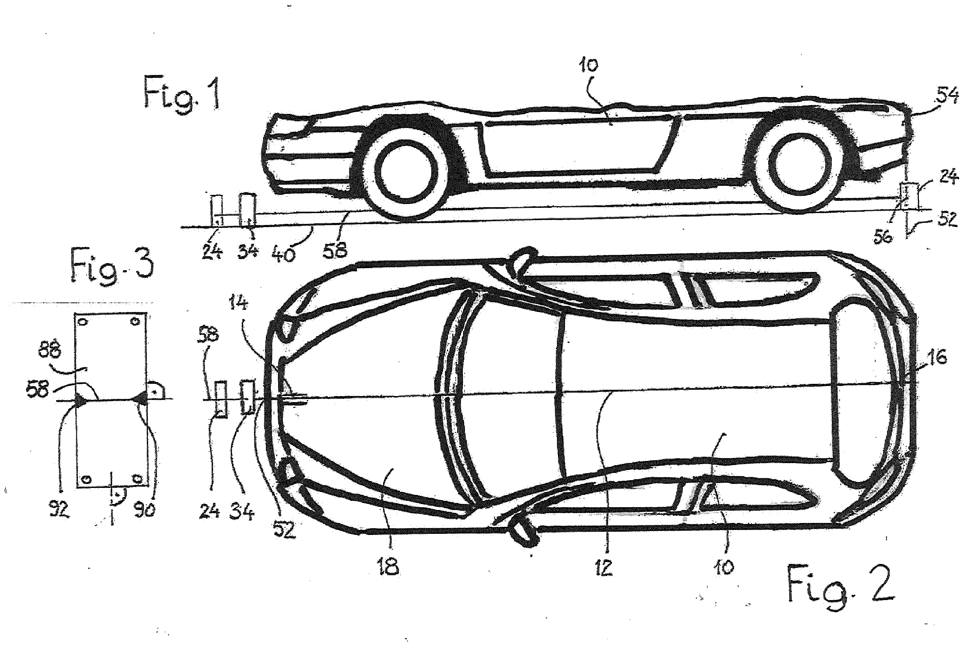

In den Figuren 1 und 2 ist ein Fahrzeug 10 (PKW) zu erkennen, dessen Mittellängsachse 12 (Fahrzeugmittellinie oder FZML) gemäß der Erfindung bestimmt werden soll. Die Mittellängsachse 12 ergibt sich durch die Verbindung zwischen einem vorderen Mittelpunkt 14 und einem hinteren Mittelpunkt 16, des Fahrzeugs 10. Der vordere Mittelpunkt 14 kann beispielsweise durch ein auf der Motorhaube 16 angebrachtes Herstelleremblem bestimmt sein, während der hintere Mittelpunkt 16 herstellerseitig vorgegeben ist durch beispielsweise ein nicht dargestelltes Schloss einer Heckklappe oder durch eine Anhängerkupplung.

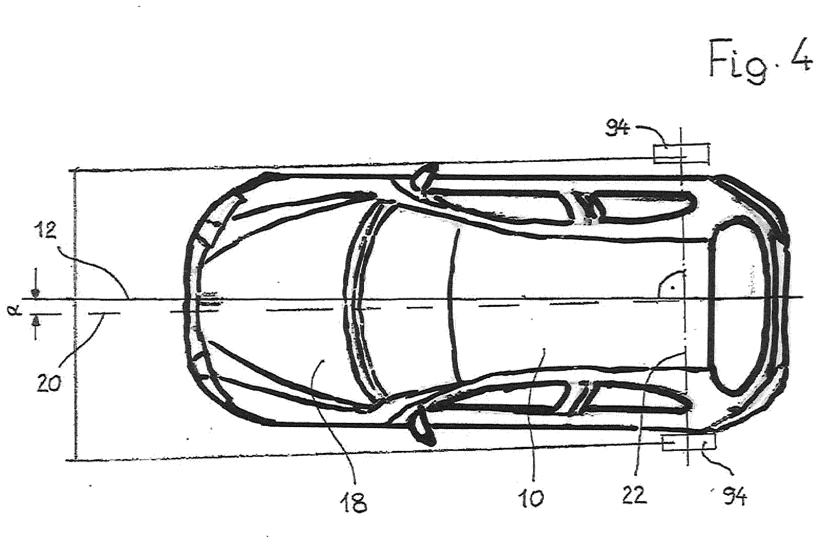

In Figur 4 ist angedeutet, dass die in dieser Weise definierte Mittellängsachse 12 von der gestrichelt eingezeichneten geometrischen Fahrachse 20 abweicht durch den Winkel a, dessen beide Schenkel sich auf der Hinterachse 22 schneiden. Die geometrische Fahrachse 20 kann durch zwei den beiden Hinterrädern zugeordnete Messeinheiten 94 ermittelt werden.

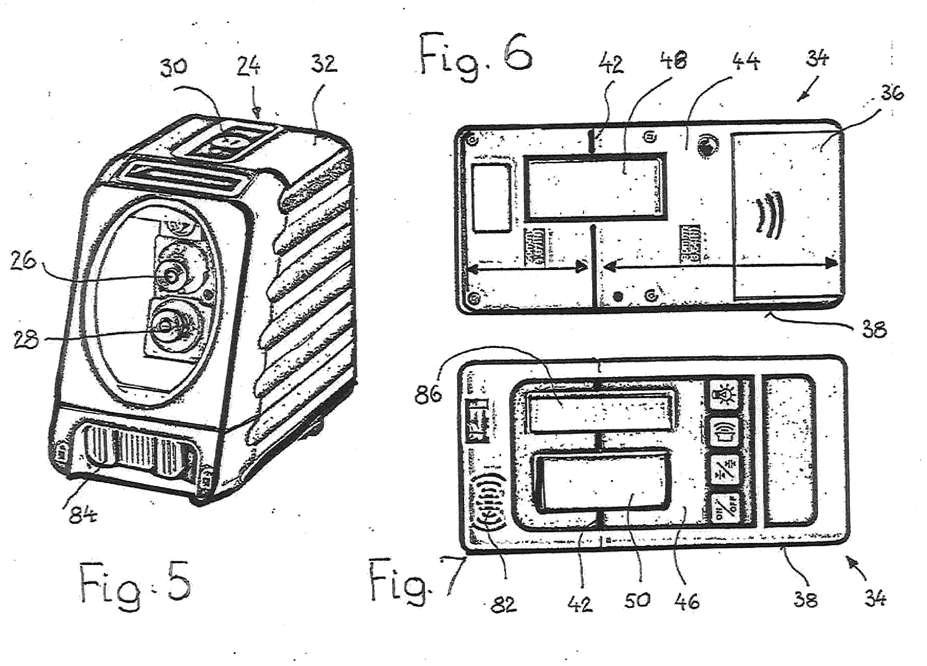

Zur Bestimmung der Symmetrielängsachse 12 dient gemäß der Erfindung ein Linienlaser 24 handelsüblicher Bauart, wie er beispielsweise in Figur 5 dargestellt ist. Dieser hat eine senkrechte Linienoptik 26 und vertikal darunterliegend eine waagrechte Linienoptik 28. Durch Drücken des Einschaltknopfes 30 am Gehäuse 32 kann die Umstellung von der Linienoptik 26 auf die Linienoptik 28 herbeigeführt werden. Ein Schiebeschalter 84 dient zur Aktivierung einer Transportsicherung.

Für die Bestimmung der Symmetrielängsachse 12 gemäß der Erfindung dient neben dem Linienlaser 24 eine davon getrennte Justiereinrichtung, bestehend aus einer Empfängereinheit 34, die in den Figuren 6 und 7 zu erkennen ist. Diese hat ein längliches, quaderförmiges Gehäuse 36, das mit seiner in den Figuren 6 und 7 angedeuteten, waagrechten Seitenfläche 38 (Standfläche) auf einer Ebene 40 abgestellt werden kann, beispielsweise dem Boden einer Werkstatt (vgl. Figur 1).

Die als Signalwandler ausgebildete Empfängereinheit 34 hat auf einer Seite eine senkrechte Referenzlinie 42, die beispielsweise als eine Kerbe in dem Gehäuse 36 ausgebildet ist. Wie die Figuren 6 und 7 zeigen, hat das Gehäuse eine Rückseite 44 und eine davon abgewandte, parallele Vorderseite 46, die beide im rechten Winkel zu der Seitenfläche 38 (Standfläche) verlaufen. Die Vorderseite 46 hat ein Anzeigedisplay 50 und eine optisch sensitive Laserempfängerfläche 86, während die Rückseite 44 ein Display 48 zur Anzeige der auf der Vorderseite 46 gemessenen Werte aufweist. Mittig durch das Anzeigedisplay 50 und die Laserempfängerfläche 86 verläuft die senkrechte Referenzlinie 42.

Bei der Bestimmung der Symmetrielängsachse 12 des Fahrzeugs 10 wird der Linienlaser 24 wie in den Figuren 1 und 2 angedeutet so an der Frontseite des Fahrzeugs 10 aufgestellt, dass der von der senkrechten Linienoptik 26 ausgehende Laserstrahl 52 genau durch den vorderen Mittelpunkt 14 des Fahrzeugs 10 verläuft. Anschließend wird die Empfängereinheit 34 unter diesem Ende des Fahrzeugs 10 positioniert, bis der senkrechte Laserstrahl 52 unter der senkrechten Referenzlinie 42 der Empfängereinheit 34 liegt. Damit ist die mittige Position der Empfängereiheit 34 definiert, so dass sie für die anschließende Messung in dieser mittigen Position belassen wird.

In einem zweiten Schritt wird der Linienlaser 24 unter das andere Ende 54 des Fahrzeugs 10, hier das hintere Ende gestellt, bis der senkrechte Laserstrahl 52 genau durch den Mittelpunkt 16 am hinteren Ende des Fahrzeugs 10 verläuft (vgl. Figur 1). Hierzu wird der Linienlaser 24 in x- und/oder in y-Richtung verschoben und anschließend so lange um seine zentrische Hochachse 56 verdreht, bis der waagrechte Laserstrahl 58 unterhalb des Fahrzeugs 10 auf die Vorderseite 46 der gegenüberliegenden Empfängereinheit 34 trifft.

Das Auftreffen des vertikalen Laserstrahls 58 auf die Laserempfängerfläche 86 erzeugt verschiedene akustische Signale, beispielsweise bei Überlagerung mit der Referenzlinie 42 ein Dauertonsignal, links von der Referenzlinie 42 ein langsames Piep-Signal und rechts davon ein schnelles Piep-Signal. Auf diese Weise kann die nötige Bewegungsrichtung des Laserstrahls 58 auch ohne Sicht bestimmt werden.

Damit ist der Laserstrahl 58 exakt zur Symmetrielängsachse 12 (Fahrzeugmittellinie) ausgerichtet und kann zur mittensymmetrischen Ausrichtung verschiedener Einstellwerkzeuge verwendet werden, z.B. von Kalibriertafeln für Fahrerassistenzsysteme nach EP 3 444 561 B1.

Da die Hochachse 56 des Linienlasers 24 mit der senkrechten Hochachse zwischen senkrechter Linienoptik 26 und waagrechter Linienoptik 28 übereinstimmt, verändert sich diese bei der Drehung um diese Hochachse 56 nicht.

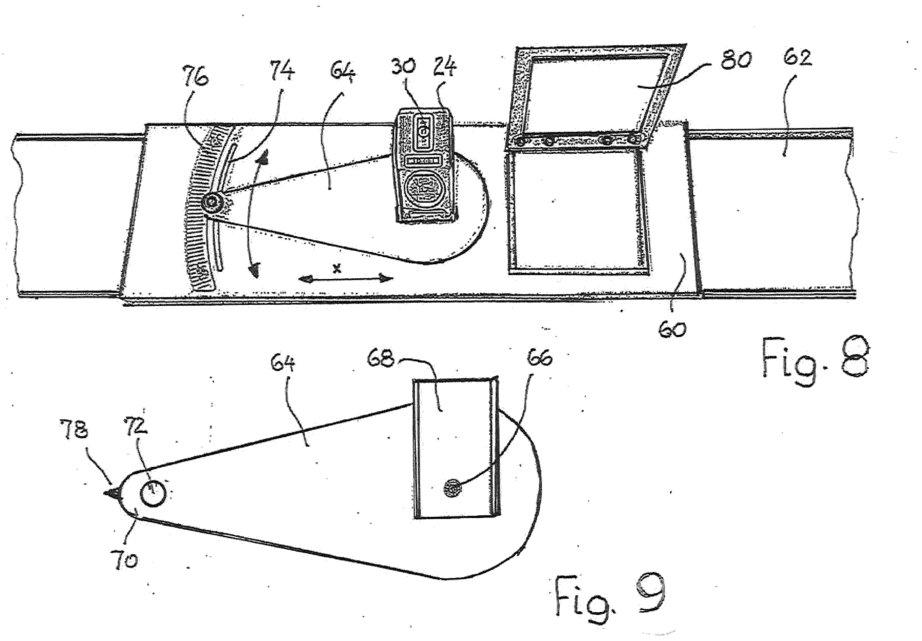

Selbstverständlich kann bei diesem Verfahren auch in umgekehrter Reihenfolge vorgegangen werden, d. h. dass der Linienlaser 24 im ersten Schritt am hinteren Ende 54 des Fahrzeugs 10 und danach am vorderen Ende positioniert wird, wobei dann die Justiereinrichtung (Empfängereinlieit 34) für die nachfolgenden Schritte unter dem hinteren Ende 54 verbleibt. Zur Verstellung des Linienlasers 24 in x- und y-Richtung dient gemäß der Erfindung eine Trägerplatte 60 (vgl. Figur 8), die als Schlitten ausgebildet ist und auf einer Hilfsschiene 62 in x-Richtung quer zur Fahrzeugmittellinie 12 verfahren werden kann. Auf der Trägerplatte 60 ist ein flacher Schwenkarm 64 um eine senkrechte Schwenkachse 66 drehbar gelagert, die mit der Hochachse 56 des Linienlasers 24 übereinstimmt. Der Linienlaser 24 wird in eine Halterung 68 auf der Trägerplatte 60 gemäß Figur 9 eingeschoben, bis dessen Hochachse 56 genau über der Schwenkachse 66 des Schwenkarms 64 liegt.

Das von der Schwenkachse 66 abgewandte Ende 70 des Schwenkarms 64 hat einen Feststellknopf 72, der in einer kreisbogenförmigen Führung 74 blockiert werden kann. Der Führung 74 ist auf der Trägerplatte 60 eine Gradskala 76 zugeordnet; der Schwenkarm 64 kann durch einen Zeigervorsprung 78 genau zu der Gradskala 76 eingestellt werden.

Wie Figur 8 zeigt, ist auf dem gegenüberliegenden Ende der Trägerplatte 60 ein ausklappbarer Spiegel 80 angebracht, mit dessen Hilfe der Auftreffpunkt des waagrechten Laserstrahls 58 auf die Empfängereinheit 34 am anderen Ende des Fahrzeugs 10 kontrolliert und eingestellt werden kann. Sobald der Laserstrahl 58 auf die Referenzlinie 42 der Empfängereinheit 34 trifft, gibt diese mittels eines Lautsprechers 82 das akustische Signal ab, das ohne nochmalige optische Kontrolle die erfolgreiche Positionierung des Laserstrahls 58 und damit der Mittellängsachse 12 anzeigt.

Wie Figur 3 erkennen lässt, kann vor das Fahrzeug 10 eine verfahrbare Kalibriervorrichtung 88 so platziert werden, dass der Laserstrahl 58 nach dem Kimme-Korn-Prinzip (Kimme 90, Korn 92) zur Mittellängsachse 12 ausgerichtet wird, d. h. diese überdeckt.

Mit der Erfindung besteht eine Kontrollmöglichkeit eines zur geometrischen Fahrachse 20 ausgerichteten Einstellsystems, z.B. für ein Fahrerassistenzsystem, zur Fahrzeugmittellinie 12. Damit kann beurteilt werden, ob vor einer Sensorkalibrierung eine Achsvermessung durchgeführt werden muss, beispielsweise bei einer zu großen Winkelabweichung α.

## Patentansprüche

1. Verfahren zur Bestimmung der Symmetrielängsachse (12) zwischen einem vorderen Mittelpunkt (14) und einem hinteren Mittelpunkt (16) eines Fahrzeugs (10) mit Hilfe eines Linienlasers (24) mit einer zugeordneten, als Justiereinrichtung ausgebildeten Empfängereinheit (34), die auf einer Seite eine senkrechte Referenzlinie (42) und auf einer gegenüberliegenden Senderseite eine opto-akustische Sendeeinheit hat, **gekennzeichnet durch** die Folge nachstehender Schritte:
a. Positionieren des Linienlasers (24) unter einem vorderen oder hinteren Ende des Fahrzeugs (10), bis ein senkrechter Laserstrahl (52) des Linienlasers (24) durch den vorderen bzw. hinteren Mittelpunkt des Fahrzeugs (10) läuft,
b. Positionieren der Justiereinrichtung unter dem genannten Ende des Fahrzeugs (10), bis der senkrechte Laserstrahl auf der senkrechten Referenzlinie (42) der Empfängereinheit (34) liegt,
c. Belassen der Empfängereinheit (34) in dieser mittigen Position gemäß Schritt b,
d. Positionswechsel des Linienlasers (24) unter das andere Ende des Fahrzeugs (10), bis der senkrechte Laserstrahl durch den gegenüberliegenden Mittelpunkt am anderen Ende des Fahrzeugs (10) läuft, wozu
e. der Linienlaser (24) in quer zur Fahrzeugmittellinie verlaufender x-Richtung und/oder in dazu rechtwinkliger y-Richtung verschoben wird und
f. so lange um seine zentrische Hochachse (56) verdreht wird, bis ein waagrechter Laserstrahl (58) des Linienlasers (24) auf die von der Referenzlinie gemäß Schritt b abgewandte Senderseite der Empfängereiheit (34) trifft, wodurch
g. diese in der nun ausgerichteten Position ein akustisches Signal aussendet.

2. Verfahren nach Anspruch 1, **dadurch gekennzeichnet, dass** der Linienlaser (24) in einer Halterung (68) eines flachen Schwenkarms (64) positioniert wird, der auf einer Trägerplatte (60) um eine senkrechte Schwenkachse (66) des Schwenkarms (64) gelagert ist, die durch das Zentrum des Linienlasers (24) verläuft.

3. Verfahren nach Anspruch 2, **dadurch gekennzeichnet, dass** das von der Schwenkachse (66) abgewandte Ende (70) des Schwenkarms (64) in einer kreisbogenförmigen Führung (74) feststellbar ist, der eine Gradskala (76) zugeordnet ist.

4. Verfahren nach einem der vorhergehenden Ansprüche, **dadurch gekennzeichnet, dass** die Trägerplatte (60) als Schlitten ausgebildet ist, der quer zur Symmetrieachse des Fahrzeugs (10) auf einer Hilfsschiene (62) verfahrbar ist.

## Claims

1. Method for determining the longitudinal axis of symmetry (12) between a front centre (14) and a rear centre (16) of a vehicle (10) with the help of a line laser (24) with an associated receiving unit designed as an adjusting device (34) that has a vertical reference line (42) on one side and an opto-acoustic transmitting unit on an opposite transmitting side, **characterised by** the following subsequent steps:
a. Positioning the line laser (24) under a front or rear end of the vehicle (10) until a perpendicular laser beam (52) of the line laser passes through the front or the rear centre point of the vehicle (10),
b. Positioning the adjusting device under said end of the vehicle (10) until the perpendicular laser beam is on the vertical reference line (42) of the receiving unit (34),
c. Leaving the receiving unit (34) in this central position according to step b,
d. Change the position of the line laser (24) under the other end of the vehicle (10) until the perpendicular laser beam runs through the opposite centre point at the other end of the vehicle (10), for which purpose
e. the line laser (24) is shifted in the x and/or y direction and
f. is rotated about its central vertical axis (56) until a horizontal laser beam (58) of the line laser (24) hits the transmitter side of the receiver unit (34) facing away from the reference line according to step b, whereby
g. this emits an acoustic signal in the now aligned position.

2. Method according to claim 1, **characterised in that** the line laser (24) is positioned in a holder (68) of a flat swivel arm (64) that is mounted on a carrier plate (60) about a vertical swivel axis (66) of the swivel arm (64), said axis running through the centre of the line laser (24).

3. Method according to claim 2, **characterised in that** the end (70) of the swivel arm (64) facing away from the swivel axis (66) can be fixed in a circular guide (74) to which is assigned a degree scale (75).

4. Method according to one of the preceding claims, **characterised in that** the carrier plate (60) is designed as a slide that can be moved on an auxiliary rail (62) transversely to the axis of symmetry of the vehicle (10).

## Revendications

1. Procédé de détermination de l'axe longitudinal de symétrie (12) entre un point central avant (14) et un point central arrière (16) d'un véhicule (10) à l'aide d'un laser à ligne (24) avec une unité de réception (34) associée réalisée en tant que dispositif d'ajustement, qui a sur un côté une ligne de référence verticale (42) et sur un côté émetteur faisant face une unité d'émission optoacoustique, **caractérisé par** la succession des étapes ci-après :
a. le positionnement du laser à ligne (24) sous une extrémité avant ou arrière du véhicule (10) jusqu'à ce qu'un rayon laser vertical (52) du laser à ligne (24) passe par le point central avant ou arrière du véhicule (10) ;
b. le positionnement du dispositif d'ajustement sous ladite extrémité du véhicule (10) jusqu'à ce que le rayon laser vertical se situe sur la ligne de référence verticale (42) de l'unité de réception (34),
c. le maintien de l'unité de réception (34) dans ladite position centrale selon l'étape b,
d. le changement de position du laser à ligne (24) sous l'autre extrémité du véhicule (10) jusqu'à ce que le rayon laser vertical passe par le point central faisant face sur l'autre extrémité du véhicule (10),
e. le laser à ligne (24) étant ainsi coulissé dans une direction x s'étendant de manière transversale par rapport à la ligne centrale de véhicule et/ou dans une direction y à angle droit par rapport à celle-ci, et
f. étant tourné ainsi autour de son axe vertical central (56) jusqu'à ce qu'un rayon laser horizontal (58) du laser à ligne (24) parvienne sur le côté émetteur, opposé à la ligne de référence selon l'étape b, de l'unité de réception (34), ce qui
d. permet à celui-ci d'émettre un signal acoustique dans la position alors orientée.

2. Procédé selon la revendication 1, **caractérisé en ce que** le laser à ligne (24) est positionné dans une fixation (68) d'un bras de pivotement (64) plat, qui est monté sur un panneau de support (60) autour d'un axe de pivotement vertical (66) du bras de pivotement (64) qui s'étend à travers le centre du laser à ligne (24).

3. Procédé selon la revendication 2, **caractérisé en ce que** l'extrémité (70), opposée à l'axe de pivotement (66), du bras de pivotement (64) peut être immobilisée dans un guidage (74) en forme d'arc de cercle, auquel est associée une échelle graduée (76).

4. Procédé selon l'une quelconque des revendications précédentes, **caractérisé en ce que** le panneau de support (60) est réalisé en tant que chariot, qui peut être déplacé sur un rail auxiliaire (62) de manière transversale par rapport à l'axe de symétrie du véhicule (10).
